# EUROPEAN PATENT APPLICATION

(11) **EP 4 260 968 A1**
(43) Date of publication of application: **18.10.2023**
(21) Application number: 23167579.4
(22) Date of filing: 12.04.2023
(51) Int. Cl.: B23B 13/02, B23B 13/08, B23B 13/12, B23B 7/06, B23B 25/06, B23Q 1/76

(54) **BAR LOADER FOR LATHES**

(30) Priority: 12.04.2022 IT 202200007292
(71) Applicant: Top Automazioni S.R.L., 47824 Poggio Torriana (RN) (IT)
(72) Inventor: Bargellini, Nicola, Poggio Torriana (IT)
(74) Representative: Luppi Intellectual Property S.r.l.

(57) **Abstract**

A bar loader (1) is disclosed for feeding a bar to a movable sliding head lathe, in which the loader comprises a centring device (11) that supports and guides the bar and is movable back and forth on linear guides with the possibility of following the movement of the spindle of the lathe without increasing the distance with the spindle, so the movement of the bar is synchronized with the movement of the spindle, increasing the stability of the rotating bar owing to the fact that the centring device is always positioned near the spindle.

## Description

### Background of the invention

The invention relates to a bar loader for feeding a machine tool, in particular for a movable sliding head lathe, namely a lathe in which longitudinal machining on the bar is obtained by an axial displacement of the bar and of the bar-holding rotating spindle rather than the tool.

Specifically, but not exclusively, the invention can be usefully applied to perform machining tasks on bars of relatively reduced diameter, although the invention can be used for bars of any diameter.

In particular, this invention relates to a bar loader made according to the preamble of claim 1. Patent publication US 2015/165526 A1 shows such a bar loader.

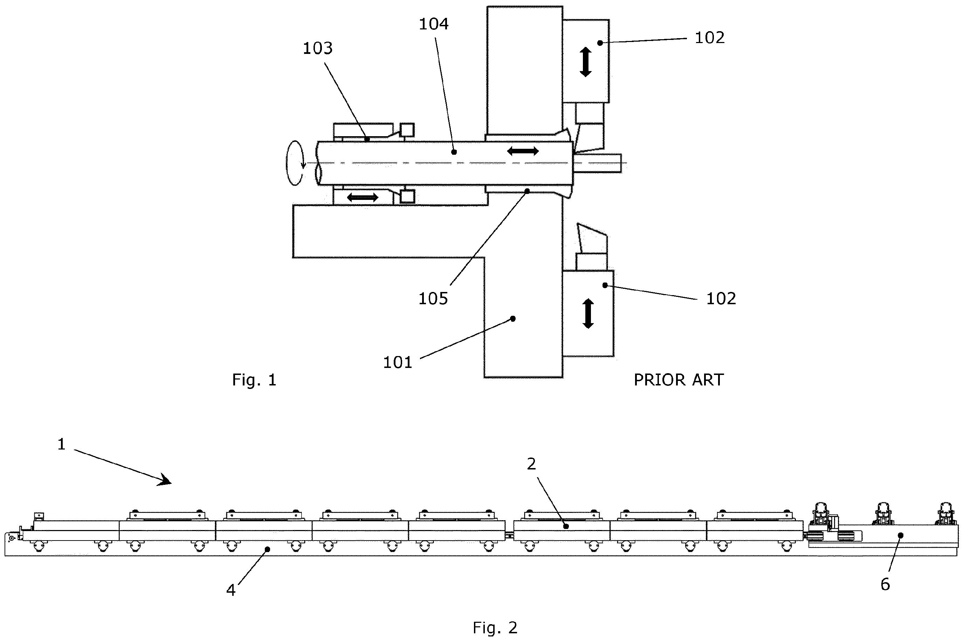

Movable sliding head lathes are known that comprise (see Figure 1) a frame 101, one or more tool holders 102, and a rotating spindle 103 (known as a movable head) that slides axially back and forth whilst it clamps a bar 104. The prior art comprises movable sliding head lathes provided, like that of Figure 1, with a guide bush 105 for radial centring of the bar near the cutting zone, or movable sliding head lathes devoid of a guide bush that is suitable for supporting the bar near the cutting zone, or also movable sliding head lathes that adopt a hybrid solution, in which it is possible to work with or without a bush by assembly and dismantling tasks (when the bush is dismantled, the spindle generally advances to recover the space that would be occupied by the bush, i.e. varying the space that would be occupied by the bush, i.e. varying the space between the spindle and the loader).

A centring device is further known that is arranged between a bar loader and a lathe to maintain the bar centred by limiting oscillation of the bar during rotation thereof. A centring device of this type is shown, for example, by patent publication EP 3488965 A1.

Various aspects of the prior art are improvable. Firstly, it is possible to improve the coordination of the movement of the bar fed by the loader with the axial movement of the spindle of the lathe, in particular a movable sliding head lathe. Further, it is desirable to further increase the stability of the bar that rotates on itself and is fed by the loader to the lathe.

### Summary of the invention

One object is to make a bar loader that is able to remedy one or more of the aforesaid limits and drawbacks of the prior art.

One object is to provide a bar loader that is an alternative to the loaders of the prior art.

One object is to improve the support and the stability of the bar in a situation of relative distance between spindle and loader.

One advantage is enabling the bar to be supported with a support action performed in a position relatively close to the spindle.

One advantage is improving the coordination of the movement of the bar with the movement of the spindle of a movable sliding head lathe.

One advantage is giving rise to a bar loader that enables a bar to be fed to a lathe maintaining a relatively high degree of stability of the bar rotating during machining.

One advantage is to propose a bar loader that enables a bar to be fed to a movable sliding head lathe with the possibility of following the movement back and forth of the head whilst still maintaining a relatively short distance between the spindle of the lathe and the support and centring means of the loader.

One advantage is making available a bar loader that is able to reduce oscillations of the bar during machining on the machine tool.

One advantage is guaranteeing adequate and effective support for the entire length of the bar during all the machining steps.

One advantage is proposing a bar loader, for feeding a bar to a machine tool, that is constructionally simple and cheap.

Such objects and advantages, and yet others, are achieved by a bar loader according to one or more of the claims set out below.

In one embodiment, a bar loader is configured to feed a movable sliding head lathe and comprises a centring device that supports and guides a bar and is movable back and forth with the possibility of following the movement of a spindle of the lathe without increasing the distance with the spindle, so the movement of the bar can be coordinated with the movement of the spindle, increasing the stability of the rotating bar owing to the fact that the centring device is always positioned near the spindle.

The bar loader may comprise, in particular, one interface (for example of mechanical or electronic type) to so connect the centring device to the spindle of the lathe that the axial movement back and forth of the centring device is synchronous with the axial movement back and forth of the spindle. The aforesaid interface of mechanical type may comprise, in particular, removable fixing means, whereas the aforesaid interface of electronic type may comprise, in particular, an electronic cam that connects two motor means, one motor means for driving the spindle movement and the other a motor means for driving the movement of the centring device.

The bar loader may comprise, in particular, means for coupling the centring device in a removable manner, by a locking member, with a system for motion transmission connected to movement drive motor means of the centring device.

In particular, the bar loader may comprise a locking system, for example with a gripping member driven by a pneumatic cylinder, which removably connects the centring device to an element for motion transmission (in particular a flexible member, for example a belt or a chain) that moves back and forth synchronized with the spindle of the lathe, so that the loader is able to follow (without substantial delays) even rapid movements of the spindle of the lathe, maintaining the rod of the loader always at the same distance from the spindle, which amongst other things enables compression of the bar to be avoided that is such as to generate undesired vibrations through buckling of the bar, thus reducing the risk of detaching the bar from the centring device with consequent vibrations and machine downtime.

These advantages are obtainable, in particular, owing to the fact that the movement of the centring device is achieved by anchoring to the main movement axis of the bar loader, owing to the connection to the element for motion transmission, minimizing, or practically cancelling, undesired coupling clearance in relation to possible motion transmission members.

### Brief description of the drawings

The invention can be better understood and implemented with reference to the appended drawings that illustrate embodiments thereof by way of non-limiting example, in which:
Figure 1 is a vertical raised schematic view of a movable single-spindle sliding head lathe of known type;
Figure 2 is a side view in a vertical elevation of one embodiment of a bar loader made according to this invention;
Figure 3 is a perspective view of an end portion of the bar loader of Figure 1 with the centring device in a distal position;
Figure 4 is a view of the end portion of Figure 3 in another perspective with the centring device in the proximal position;

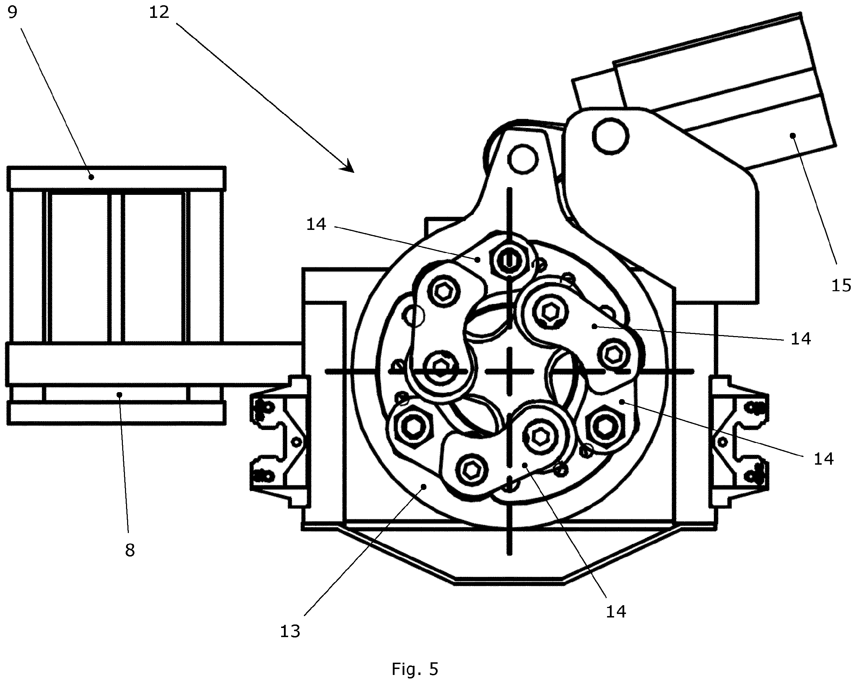

Figure 5 is a frontal view of the centring device of Figures 3 and 4;

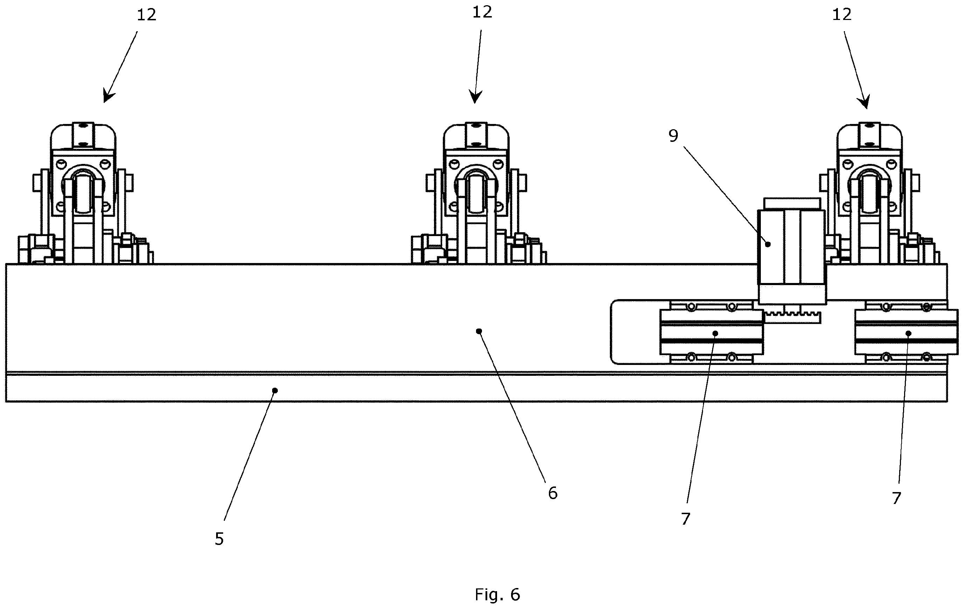

Figure 6 is a side view of the centring device of Figure 5;

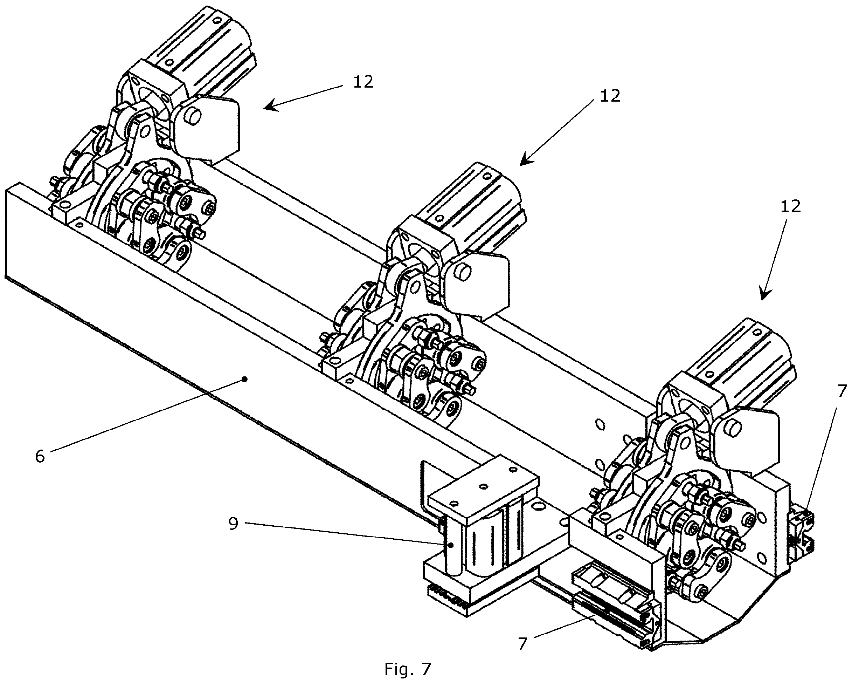

Figure 7 is a perspective view of an enlarged detail of the centring device of Figures 3 to 6;

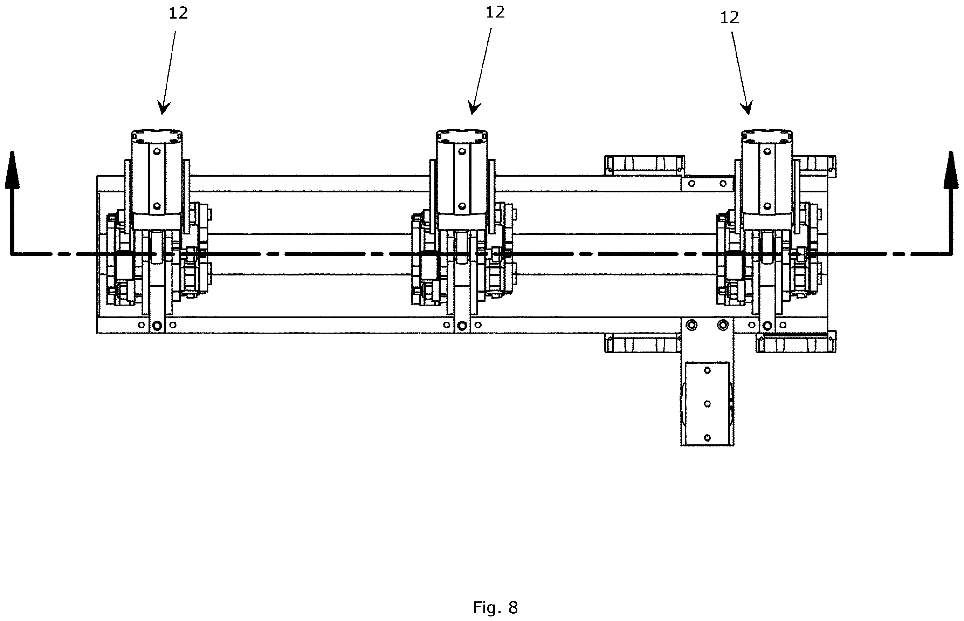

Figure 8 is a top plan view of the centring device of Figures 3 to 7;

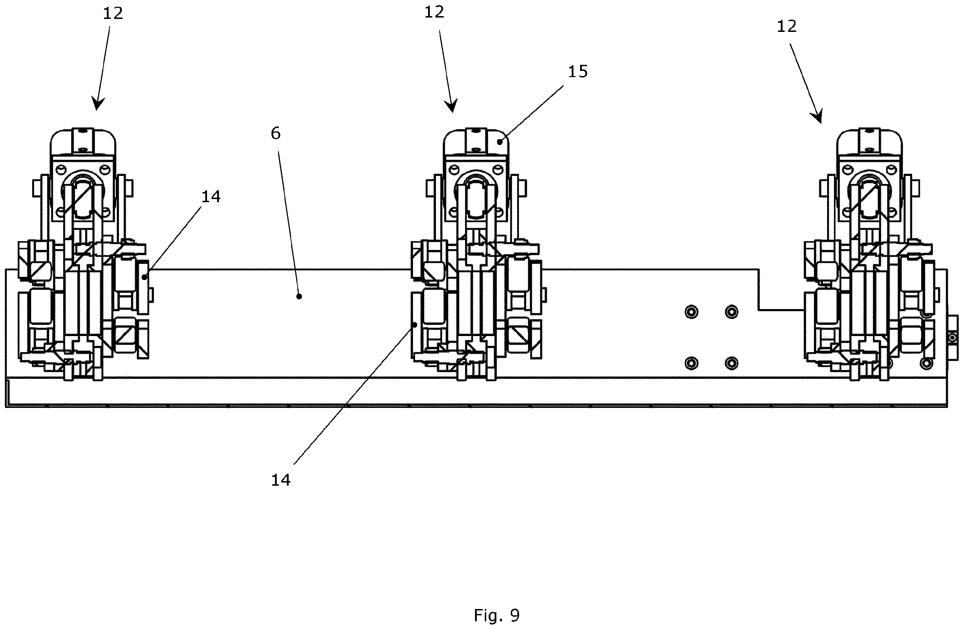

Figure 9 is the section IX-IX of Figure 8;
Figure 10 is a perspective view of the bar loader of Figure 2 in which the mechanical interface is visible with which the loader is connected to the spindle of a movable sliding head lathe;
Figure 11 shows an enlarged detail of Figure 10;
Figure 12 is a view of the loader in Figure 10 in another perspective;
Figure 13 shows an enlarged detail of Figure 12.

### Detailed description

With reference to the aforesaid figures, 1 indicates overall a bar loader configured to feed a bar to a spindle (for example the rotating spindle 103 of Figure 1) of a machine tool, in particular to a spindle of a movable sliding head lathe (for example the lathe of Figure 1).

The bar loader 1 may comprise, in particular, a feed channel 2 configured to define a (horizontal) path along an advancement axis of the bar. The feed channel 2 may comprise, in particular, an outlet end 3 for the bar. The feed channel 2 may comprise, in particular, a series of lower guides (for example in the form of half-bushes) that is operationally associated with a corresponding series of upper guides (for example in the form of half bushes). The bar loader 1 may comprise, in particular, support means 4 extending longitudinally and configured to support the feed channel 2, for example support means comprising at least one beam extending longitudinally along the advancement axis of the bar.

The bar loader 1 may comprise, in particular, a support structure 5 that is integral with the feed channel 2 and/or integral with the support means 4. The support structure 5 protrudes axially from the aforesaid outlet end 3. The support structure 5 may comprise, in particular, a beam portion that substantially constitutes a prolongation of the support means 4.

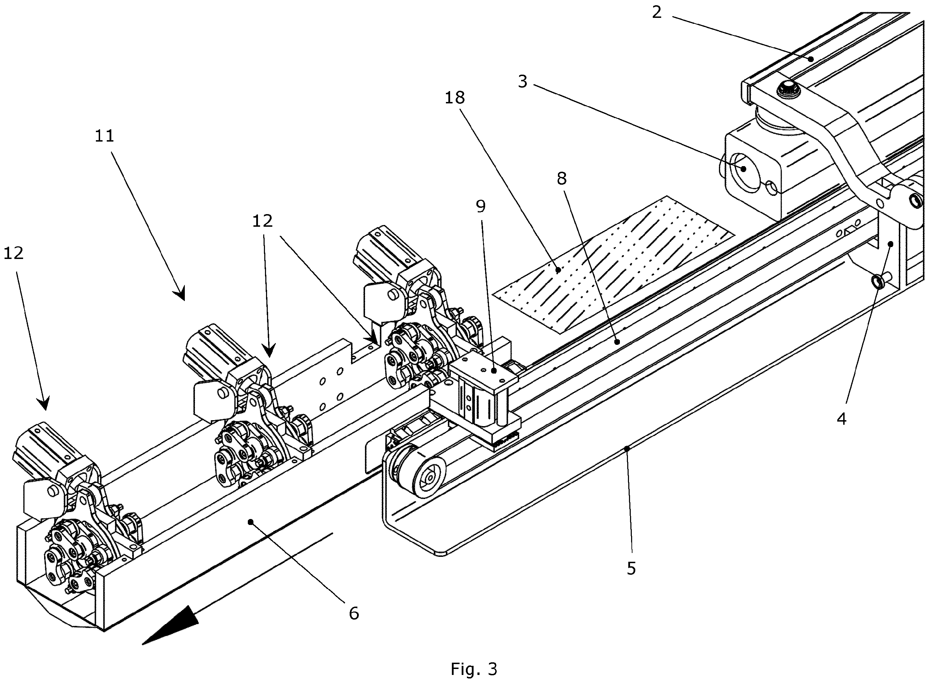

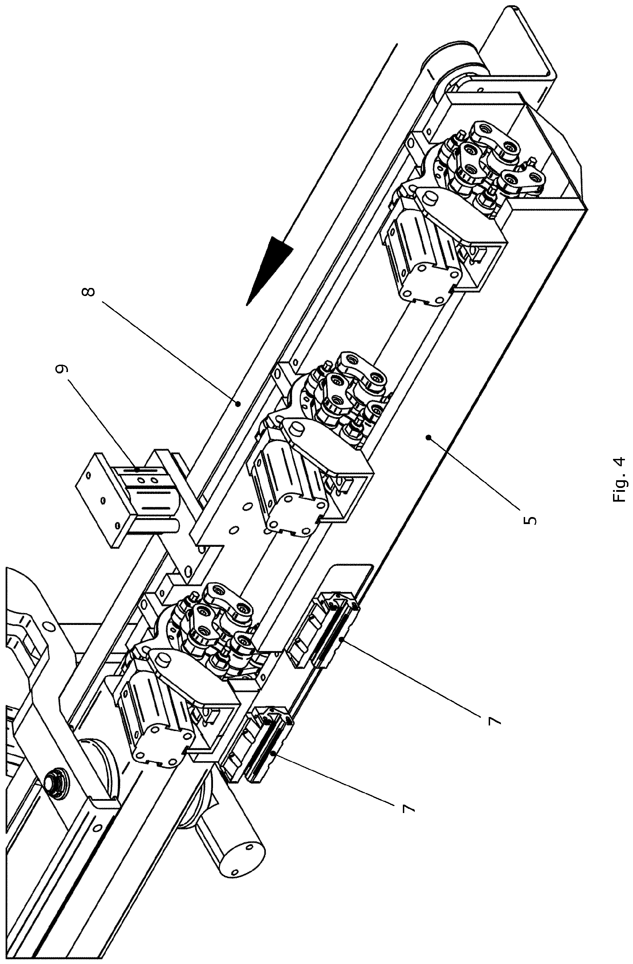

The bar loader 1 may comprise, in particular, a shuttle 6 axially movable on a guide system 7 arranged on the support structure 5. The shuttle 6 may be movable, in particular, with the possibility of adopting at least one proximal position (see Figure 4), in which the shuttle 6 is near the outlet end 3, and at least one distal position (see Figure 3), in which the shuttle 6 is spaced away from the outlet end 3 (and near the machining zone of the machine tool).

The support structure 5 may comprise, in particular, at least one beam support extending axially. As said, each beam support may comprise, in particular, an end portion that extends a beam of the support means 4 extending axially along the feed channel. The guide system 7 may comprise, in particular, at least one pad arranged on the shuttle 6 and coupled slidingly with at least one linear guide arranged on the beam support.

The support structure 5 may comprise, in particular, at least two beam supports extending axially and distant from each other. The guide system 7 may comprise, in particular, pads arranged on two opposite sides of the shuttle 6 and slidably coupled with at least two linear guides each of which is arranged on a respective beam support of the support structure 5.

The bar loader 1 may comprise, in particular, a control device configured to control an axial movement in both directions of the shuttle 6 between the proximal position and the distal position. The control device may comprise, in particular, at least one flexible member 8 for motion transmission (for example a belt or a chain) and at least one reversible motor (for example an electric motor) to drive sliding of the flexible member 8 in both directions.

The control device may comprise, in particular, a coupling system 9 configured to couple removably the shuttle 6 with the flexible member 8. The coupling system 9 may be, in particular, capable of adopting at least one active position, in which the shuttle 6 is coupled with the flexible member 8 to receive an axial movement from the flexible member 8, and at least one inactive position, in which the shuttle 6 is decoupled from the flexible member 8. The flexible member 8 may be, in particular, arranged in a loop with at least one axially extending branch or portion of flexible member. The coupling system 9 may be, in particular, configured to operate on the aforesaid branch or portion of flexible member.

The coupling system 9 may comprise, in particular, at least one locking clamp that is arranged on the shuttle 6 and operates to lock the shuttle 6 on the flexible member 8. The locking clamp may be, in particular, actuated by an actuator, for example an actuator of pneumatic type (as in this case), to selectively lock and unlock the shuttle 6 on the flexible member 8.

The coupling system 9 creates an embodiment of possible means for coupling the centring device 11 in a removable manner (by a locking member), with a system for motion transmission (for example with a flexible member 8) connected to movement drive motor means of the centring device.

The coupling system 9 enables the centring device 11 to be locked removably for example with a gripping member driven by a pneumatic cylinder to a movement device (in particular to an element for motion transmission, for example a flexible member 8) that can be moved back and forth synchronized with the spindle of the lathe, so that the bar loader 1 is able to follow (without substantial delays) even rapid movements of the spindle of the lathe, always maintaining the nozzle of the loader at the same distance from the spindle.

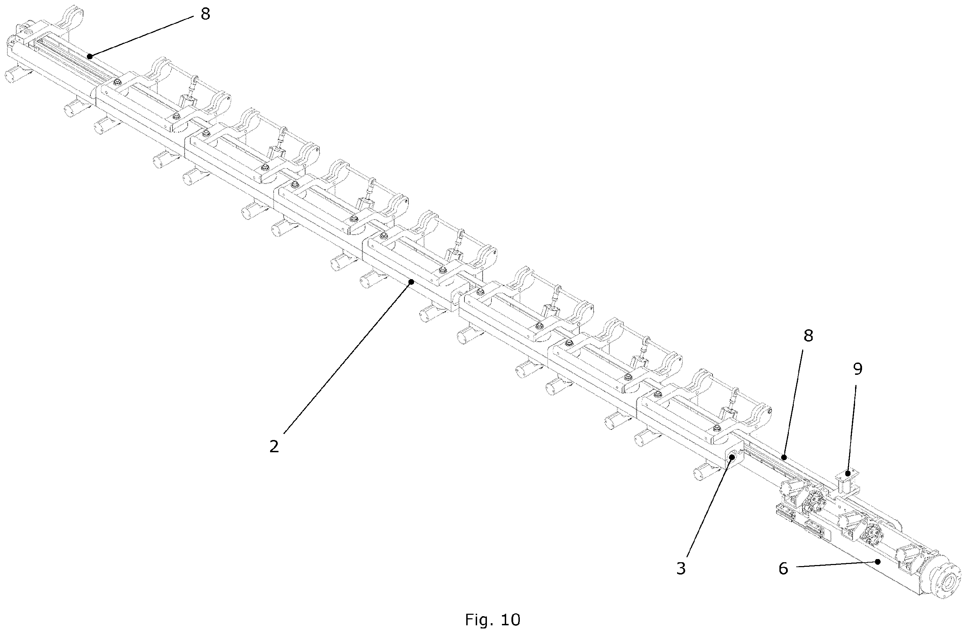

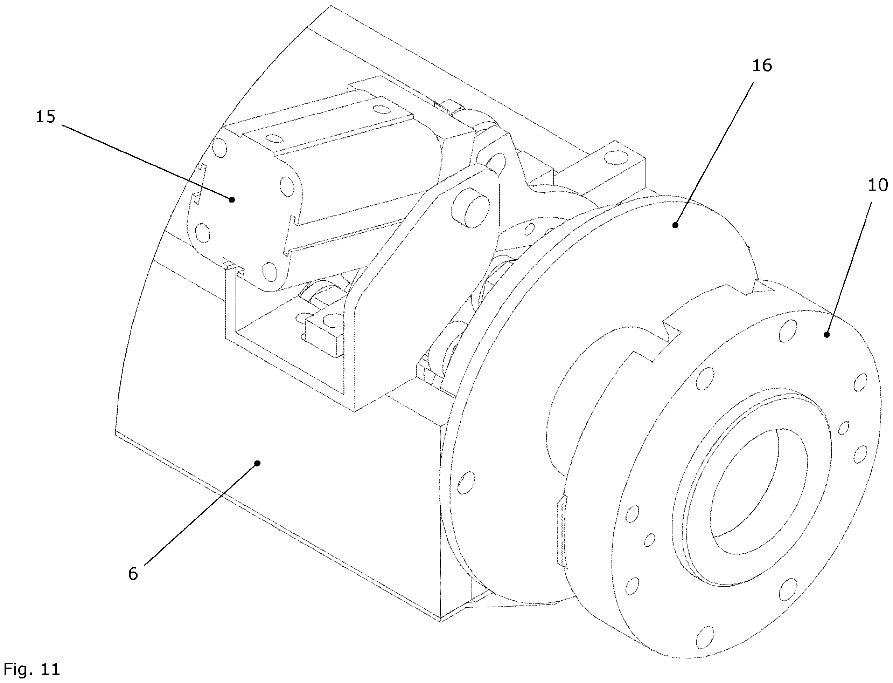

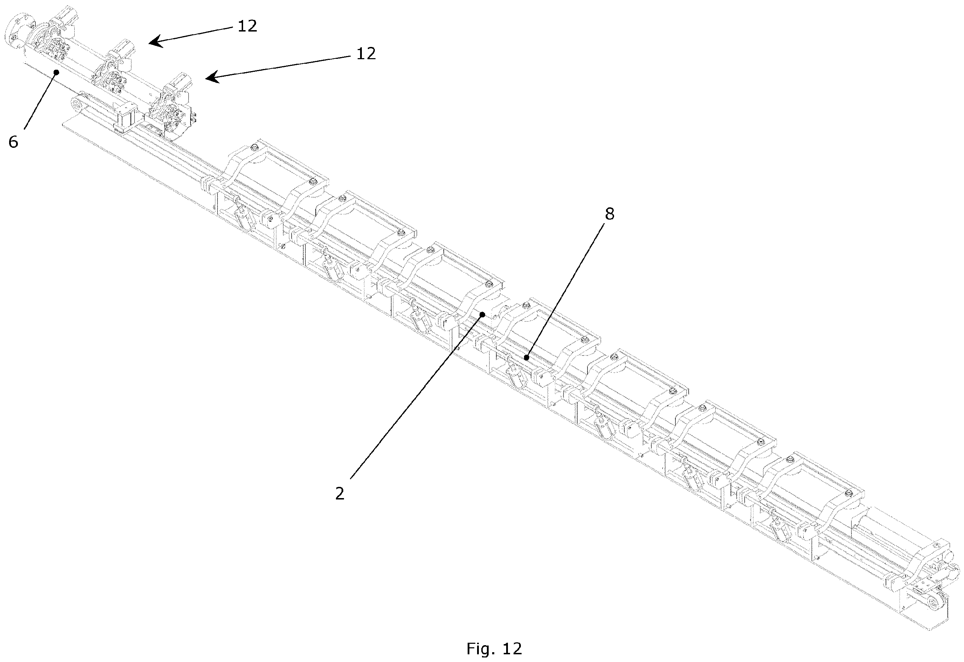

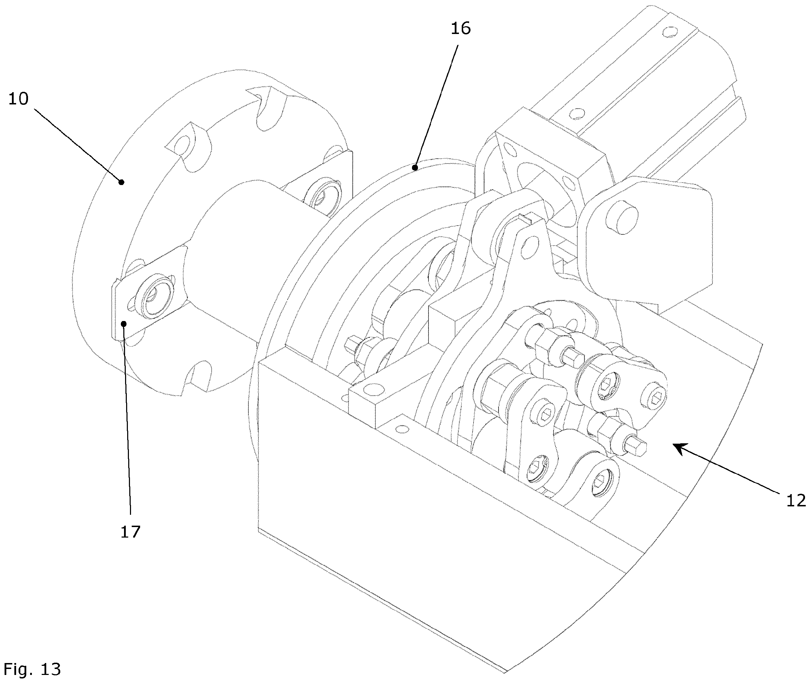

The bar loader 1 may comprise, in particular (see Figures 10-13), one mechanical interface configured to connect mechanically the shuttle 6 to the movable head of a lathe so as to coordinate the axial back and forth movements of the shuttle 6 and of the spindle of the lathe.

The mechanical interface may comprise, in particular as in this specific embodiment, flange means 10 (arranged on the lathe side) connected to a connecting sleeve 16 (arranged on the loader side). It is possible to provide locking means 17, in particular of adjustable type, for example with movable plate and guided fixing means, for locking the flange means 10.

The mechanical interface may comprise, in particular, at least one rod, or another longitudinal element (for example the connecting sleeve 16), with an end connected to the shuttle 6 and the opposite end connected to the movable head of the lathe. The connection of the two ends of the rod may be connected with removable fixing means. The mechanical interface may anyway comprise any type of mechanical connection that is able to make the axial movements of the two connected elements (shuttle 6 and spindle) integral.

In replacement of or in addition to the mechanical interface, it is possible to provide one electronic interface, for example an interface comprising an electronic cam that connects a drive motor of the axial movement of the shuttle 6 to a drive motor of the axial movement of the spindle of the lathe, or another type of controller that controls the two motors, so that the axial back and forth movements of the shuttle 6 and of the spindle of the lathe are synchronous with one another.

The bar loader 1 may comprise, in particular, a centring device 11 arranged on the shuttle 6 and configured to centre axially the bar exiting the feed channel 2.

The centring device 11 may be configured, in particular, to enable the bar to rotate around the advancement axis and/or axial sliding of the bar with respect to the centring device 11.

The centring device 11 may comprise, in particular, a centring device of the type with wheels in contact with the bar, as in the specific embodiment illustrated here by way of non-limiting example, or a centring device of another type (also of known type), for example of the type with centring half bushes. The centring device 11 could be interchangeable with other centring devices (also of known type). The centring device 11 may be of the type with automatic adjustment, as in this embodiment, or with manual adjustment. The automatic adjustment may comprise, in particular, control means for controlling the bar loader 1 (for example a control by a PLC of the bar loader 1), or control means of the machine tool (for example the CNC of the lathe). The control may be driven, in particular, by actuating means of pneumatic or electric type.

The centring device 11 may comprise, in particular, at least one centring device 12 (in this case of the type with wheels) arranged on the shuttle 6. The centring device 11 may comprise, as in this specific non-limiting embodiment, at least two centring device 12 (in the specific embodiment three centring devices 12, even if four or more centring units may be provided) arranged on the shuttle 6 and spaced axially apart from one another.

Each centring device 12 may comprise, in particular, guide means 13 provided with a hole to enable a bar to pass along the advancement axis and arranged on the shuttle 6 with the possibility of rotating around the advancement axis. Each centring device 12 may comprise, in particular, two or more rockers 14 coupled with the guide means 13. Each rocker 14 may be, in particular, rotatable on the shuttle 6 around a fulcrum and may be provided, in particular, with a wheel for centring contact with the bar.

Each centring device 12 may comprise, in particular, coupling means, in particular coupling means of the pin-groove type, configured to couple the guide means 13 with the rockers 14 so that a rotation of the guide means 13 causes a displacement of the wheels of the rockers 14 and, through the aforesaid displacement, each wheel can adopt at least one proximal position in which it is radially nearer the advancement axis, and at least one distal position in which it is radially further from the advancement axis, so that the wheels define an adjustable passage for the bar which is narrower with the wheels in the proximal position and is wider with the wheels in the distal position.

Each centring device 12 may comprise, in particular, actuating means 15 configured to rotate the guide means 13 so as to position the wheels selectively in the aforesaid proximal and distal positions.

For each centring device 12, the rockers 14 may be, in particular, six in number (as in the specific non-limiting embodiment) and may be configured so that the respective six wheels are angularly arranged equally spaced away from each other around the advancement axis. It is possible to provide, in particular, for the respective six wheels being arranged in two groups of three wheels each, in which the three wheels of each group are coplanar with each other on respective lying planes orthogonal to the advancement axis, with the respective lying planes that are axially spaced apart from each other.

The guide means 13 of each centring device 12 may comprise, in particular, two discs each provided with a hole. The holes of the two discs may be, in particular, arranged aligned with each other to allow the bar to pass along the advancement axis. Each of the two discs may be, in particular, arranged on the shuttle 6 with the possibility of rotating around the advancement axis. The aforesaid actuating means 15 may comprise, in particular, an actuator for each centring device 12, for example a linear actuator as in the specific embodiment, arranged to rotate together the two discs of the guide means 13.

The pin-groove coupling means may comprise, for each rocker 14, a pin carried by an end of the respective rocker 14 and slidably coupled with a shaped groove arranged on the guide means 13. The shaped groove may comprise, in particular, an arcuate-shaped groove with a longitudinal extension with at least one component in the radial direction, where "radial" means with reference to the advancement axis.

The guide means 13 may comprise, in particular, for each of the aforesaid rockers 14, an opening for the transit of the respective fulcrum around which the respective rocker is rotatable 14. This opening may comprise, in particular, an opening extending along an arc of circumference that is coaxial with the advancement axis.

Each rocker 14 may comprise, in particular, a first member coupled with the guide means 13 by the aforesaid coupling means and a second member parallel to and spaced with respect to the first member. Each of the aforesaid wheels may be, in particular, rotatably coupled with the respective first member and/or the respective second member. Each wheel may be, in particular, arranged between the respective first member and the respective second member. The second member may be, in particular, shorter than the first member. The aforesaid fulcrum, around which the respective rocker is rotatable 14, may comprise, in particular, at least one portion of fulcrum arranged between the first member and the second member.

Each of the aforesaid wheels may be rotatable in an idling manner around a respective axis of rotation parallel to the advancement axis. It is possible for each of the aforesaid rockers 14, the respective fulcrum, around which the respective rocker is rotatable 14, to comprise a fulcrum axis that is parallel to the advancement axis.

The bar loader 1 may comprise, in particular, a retractable guide device 18 of the concealed type, capable of adopting a guide position (not illustrated), in which the retractable guide device 18 is interposed between the outlet end and the shuttle in a distal position to support and axially guide the bar, and a concealed position (detailed in Figure 3), in which the retractable guide device 18 is spaced apart from the aforesaid guide position and does not interfere with the shuttle in the proximal position.

This retractable guide device 18 may comprise, in particular, one or more half-bush supports capable of performing a vertical movement with the possibility of adopting the concealed position, wherein each half-bush support is arranged below the advancement axis of the bar, and the guide position, in which each half-bush support is coaxial with the advancement axis of the bar.

The bar loader 1 may be, in particular, operationally associated with a movable sliding head lathe (for example a lathe of known type like that of Figure 1), in which the lathe may comprise, in particular, at least one spindle and at least one tool holder. The spindle of the lathe may be configured, in particular, to slide axially and to clamp the bar by pushing the bar back and forth and rotating it around its own axis. The centring device 11 of the bar loader 1 may be aligned with the spindle of the lathe and arranged between the feed channel 2 of the bar loader 1 and the spindle of the movable sliding head lathe.

In operation, the shuttle 6, which carries the centring device 11, will be axially movable back and forth - synchronized with the movement of the spindle of the lathe owing to the connection interface (for example the mechanical interface) between the shuttle 6 and the movable head of the lathe - supported by the guide system 7 (for example with ground linear guides). The coupling system 9 may comprise the possibility of locking or unlocking selectively the motion transmission by the flexible member 8, with the function of assisting the dragging of the centring device 11 carried by the shuttle 6. The centring device 11 must centre the bar and follow the feed movement thereof to the lathe. The motion transmission system may comprise, in particular, the flexible member 8 (for example a belt or a chain) or another type of motion transmission, whereas the auxiliary movement can be driven by an electric motor or another type of drive.

During the advancement of the shuttle 6 that carries the centring device 11, the distance that is created between the outlet end 3 and the shuttle can be recovered by the retractable guide device 18 of the concealed type that can be moved to the guide position to assist the support of the bar in the aforesaid distance.

## Claims

1. Bar loader (1), configured to feed a bar to a spindle of a machine tool, said bar loader comprising:
- a feed channel (2) configured to define a path along an advancement axis for a bar, said feed channel comprising an outlet end (3) for the bar;
- a support structure (5) connected to said feed channel (2) and projecting axially from said outlet end (3);
- a shuttle (6) movable axially on said support structure (5) with the possibility of adopting at least one proximal position in which said shuttle (6) is near said outlet end (3), and at least one distal position, in which said shuttle is distant from said outlet end;
- a control device configured to control an axial movement in both directions of said shuttle (6) between said at least one proximal position and said at least one distal position;
- a centring device (11) arranged on said shuttle (6) and configured to centre the bar axially to enable the bar to both rotate around said advancement axis and slide axially with respect to said centring device;
**characterized by** comprising:
- at least one interface configured to connect said shuttle (6) to a spindle of a sliding head lathe that is so movable that an axial movement of said shuttle (6) is synchronized with an axial movement of the spindle, said at least one interface comprising one mechanical interface (10, 16, 17) to connect said shuttle (6) mechanically to the spindle of the lathe.

2. Bar loader according to claim 1, wherein said mechanical interface (10, 16, 17) comprises a longitudinal element (16) with an end connected to said shuttle (6) and an opposite end connectable to the lathe.

3. Bar loader according to claim 1 or 2, wherein said mechanical interface (10, 16, 17) comprises flange means (10) connected to a longitudinal element (16); said mechanical interface (10, 16, 17) comprising, in particular, locking means (17), in particular of adjustable type, to lock said flange means (10).

4. Bar loader according to any one of the preceding claims, wherein said at least one interface comprises one electronic interface in which an electronic cam connects a drive of the shuttle (6) with a drive of the spindle of the lathe.

5. Bar loader according to any one of the preceding claims, wherein said control device comprises at least one flexible member (8) for motion transmission, at least one reversible motor to drive sliding of said at least one flexible member (8) in both directions and at least one coupling system (9) configured to couple removably said shuttle (6) with said at least one flexible member (8), said at least one coupling system (9) being capable of adopting at least one active position, in which said shuttle (6) is coupled with said at least one flexible member to receive an axial movement from said at least one flexible member, and at least one inactive position, wherein said shuttle is decoupled from said at least one flexible member, said at least one flexible member (8) being arranged in a loop with at least one branch of a flexible member extending where said at least one coupling system (9) operates.

6. Bar loader according to claim 5, wherein said coupling system (9) comprises at least one locking clamp that is arranged on said shuttle (6) and operates on said flexible member (8) and is actuated by an actuator, in particular an actuator of pneumatic type.

7. Bar loader according to any one of the preceding claims, comprising a retractable guide device (18) capable of adopting a guide position, in which it is interposed between said outlet end (3) and said shuttle (6) in a distal position to support and axially guide the bar, and a retracted position, in which it is spaced away from said guide position and does not interfere with said shuttle (6) in the proximal position.

8. Bar loader according to any one of the preceding claims, wherein said support structure (5) comprises at least one beam support extending axially and on which said shuttle (6) slides; said support structure (5) comprising, in particular, at least two beam supports extending axially and distant from each other, and said shuttle (6) being slidable, in particular, on at least two linear guides each of which is arranged on a respective beam support and is coupled with at least one respective pad arranged on said shuttle; each beam support comprising, in particular, an end portion of a beam extending axially along said feed channel (2).

9. Bar loader according to any one of the preceding claims, wherein said centring device (11) comprises at least one centring device (12) arranged on said shuttle (6).

10. Bar loader according to any one of the preceding claims, wherein said centring device (11) comprises at least two or three centring devices (12) arranged on said shuttle and axially spaced apart from one another.

11. Bar loader according to claim 9 or 10, wherein each centring device comprises:
- guide means (13) provided with a hole to enable a bar to pass along said advancement axis and arranged on said shuttle with the possibility of rotating around said advancement axis;
- two or more rockers (14) coupled with said guide means (13), each of said rockers being rotatable on said shuttle (6) around a fulcrum and being provided with a wheel for centring the bar;
- coupling means, in particular of the pin-groove type, configured to couple said guide means (13) with said rockers (14) in such a manner that a rotation of said guide means causes a displacement of the wheels of said rockers and that, through the effect of said displacement, each wheel can adopt at least one proximal position in which it is radially nearer said advancement axis, and at least one distal position in which it is radially more distant from said advancement axis, so that the wheels define an adjustable passage for the bar which is narrower with the wheels in the proximal position and is wider with the wheels in the distal position;
- actuating means (15) for rotating said guide means for positioning said wheels selectively in said proximal and distal positions.

12. Bar loader according to claim 11, wherein said rockers (14) are six in number and are configured so that the respective six wheels are angularly arranged equally spaced away from each other around said advancement axis; the respective six wheels being, in particular, arranged in two groups of three wheels each, wherein the three wheels of each group are coplanar with each other on respective lying planes orthogonal to said advancement axis, with the respective lying planes that are axially spaced apart from each other.

13. Bar loader according to claim 11 or 12, wherein said guide means (13) comprises two discs each provided with a hole, the holes of said two discs being arranged aligned with each other to allow the bar to pass along said advancement axis, each of said two discs being arranged on said shuttle (6) with the possibility of rotating around said advancement axis; said actuating means (15) comprising, in particular, an actuator, for example a linear actuator, arranged to rotate said two discs together.

14. Bar loader according to any one of claims 11 to 13, wherein:
- said coupling means is of the pin-groove type and comprises for each of said rockers (14), a pin carried by one end of the respective rocker arm and slidingly coupled with a shaped groove arranged on said guide means; said shaped groove comprising, in particular, an arcuate-shaped groove with a longitudinal extension with at least one component in the radial direction, where "radial" means with reference to said advancement axis; and/or
- said guide means (13) comprises, for each of said rockers (14), an opening for the transit of the respective fulcrum around which the respective rocker is rotatable; said opening comprising, in particular, an opening extending along an arc of circumference that is coaxial with said advancement axis; and/or
- each of said rockers (14) comprises a first member coupled with said guide means (13) by said coupling means and a second member parallel to and spaced with respect to said first member; each of said wheels being, in particular, rotatably coupled with the respective first member and/or the respective second member; each wheel being, in particular, arranged between the respective first member and the respective second member; said second member being, in particular, shorter than said first member; said fulcrum, around which the respective rocker is rotatable, comprising, in particular, at least one portion of fulcrum arranged between said first member and said second member; and/or
- each of said wheels is idly rotatable around a respective axis of rotation parallel to said advancement axis; and/or
- for each of said rockers (14), the respective fulcrum, around which the respective rocker is rotatable, comprises a fulcrum axis that is parallel to said advancement axis.

15. Combination of a movable sliding head lathe and of a bar loader, wherein said lathe comprises at least one spindle and at least one tool holder, said spindle being configured to slide axially and to clamp a bar by pushing the bar back and forth and rotating it around its own axis, and wherein said bar loader (1) is made according to any one of the preceding claims, said centring device (11) being aligned with said spindle and being arranged between said feed channel (2) and said spindle.
